(19) Europäisches Patentamt
European Patent Office
Office européen des brevets

(11) Publication number: **0 370 286 B1**

(12) **EUROPEAN PATENT SPECIFICATION**

(45) Date of publication of patent specification: **16.06.93**

(51) Int. Cl.[5]: **C08G 18/80**, C08G 18/50, C08G 18/76, C07C 275/28

(21) Application number: **89120321.8**

(22) Date of filing: **03.11.89**

The file contains technical information submitted after the application was filed and not included in this specification

(54) **Liquid isocyanate prepolymers.**

(30) Priority: **16.11.88 US 272184**
**23.01.89 US 300868**
**23.01.89 US 300870**

(43) Date of publication of application:
**30.05.90 Bulletin 90/22**

(45) Publication of the grant of the patent:
**16.06.93 Bulletin 93/24**

(84) Designated Contracting States:
**AT BE CH DE ES FR GB IT LI NL SE**

(56) References cited:
**EP-A- 0 268 849**
**EP-A- 0 288 825**
**US-A- 4 611 083**

(73) Proprietor: **MILES INC.**
**One Mellon Center 500 Grant Str.**
**Pittsburgh, PA 15219-2502(US)**

(72) Inventor: **Slack, William E.**
**R.D. No.1 Box 100**
**Moundsville West Virginia 26041(US)**

(74) Representative: **Müller, Gerhard, Dr. et al**
**BAYER AG Konzernverwaltung RP Patentabteilung**
**W-5090 Leverkusen 1 Bayerwerk (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**EP 0 370 286 B1**

## Description

BACKGROUND OF THE INVENTION

Urea-group containing polyisocyanate mixtures which are liquid at room temperature are known. See U.S. Patents 4,611,083 and 4,703,100. Such mixtures are described as being prepared by reacting polyoxyalkylene polyamines having functionalities of from 2 to 5 and amine numbers of from 20 to 250 with specific polyisocyanates based on diphenylmethane diisocyanate. The polyisocyanate used are selected from the group consisting of (i) at least one diphenylmethane diisocyanate isomer and (ii) a mixture of diphenylmethane diisocyanates and polyphenyl polymethylene polyisocyanates where the diisocyanate content of the mixture is from 55 to 90 weight percent. See also U.S. Patent 4,689,356. Similar products are described in U.S. Patent 4,705,814, but the isocyanate used is an aliphatic isocyanate.

It is also known that diphenylmethane diisocyanate and its higher derivatives can form stable prepolymers with primary amine terminated materials having a degree of amination of from about 25 to 85% and with secondary amine-terminated materials having a degree of amination of from 25 to 100%. See, U.S. Patent 4,686,242. The amines described in this reference are prepared by reacting a hydroxyl-terminated polyether with hydrogen and ammonia or a primary amine in the presence of catalysts to reductively aminate the polyether.

Isocyanate prepolymers are also known which can be prepared by reacting aromatic isocyanates with aromatic amine-amides See, U.S. Patent 4,609,683. The amides are described as being prepared by reacting isatoic anhydride with a polyoxyalkylene polyamine. Similar amides are described in U.S. Patents 4,180,644 and 4,609,684, for use in making a variety of polyurethane type materials.

Compounds having terminal aromatic amine groups and having the general structure:

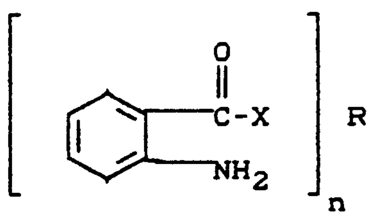

are known. In U.S. Patent 3,808,250, X is defined as oxygen or sulfur, n is an integer of from 2 to 8, and R is defined as an n-valent radical obtained by the removal of hydroxy groups or mercapto groups from an n-valent polyether or polythioether having a molecular weight of from 600 to 10,000. U.S. Patents 3,817,940 and 3,929,863 describe similar compounds where R is based on a polyol or polythiol having a molecular weight of less than 600. U.S. Patents 3,975,428 and 4,016,143 describe similar compounds prepared by reacting isatoic acid anhydride with a compound containing at least two hydroxyl groups and at least one tertiary nitrogen group and having a molecular weight of from about 119 to about 1000. Similar compounds are described in U.S. Patents 4,136,091, 4,169,206, 4,186,257, 4,228,249 and 4,260,557. Para substituted compounds are described in U.S. Patents 4,504,648 and 4,515,981. Finally, similar para-, meta- and di-meta substituted compounds are described in U.S. 4,328,322 and 4,732,959. While all of these references describe that the compounds disclosed can be used to manufacture polyurethane products, none describe liquid isocyanate-terminated prepolymers based on those compounds.

Recently, there have been disclosed poly-(amino aromatic) compounds of the structure

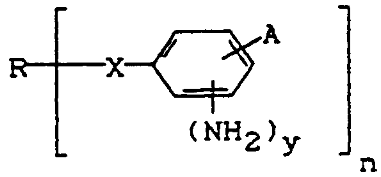

where R is an n-valent group obtained by the removal of the hydroxyl or mercapto groups from an n-valent polyol or polythio having a molecular weight of from 400 to about 12,000, A is hydrogen or an inert substituent, X represents oxygen or sulfur, n represents an integer of from 2 to 8, and y is 1 or 2. See European Patent Application 0,268,849. Such compounds are described as useful in preparing polyurethane elastomers.

DESCRIPTION OF THE INVENTION

The present invention is broadly directed to a liquid, isocyanate-terminated prepolymer having an isocyanate group content of from 14.4 to 38 percent by weight and a viscosity at 25° C of from 21 to 7860 mPas and preferably from 14.4 to 35 percent by weight, prepared by reacting

(i) an isocyanate selected from methylene bis(phenylisocyanates), polymethylene poly-(phenylisocyanates), mixtures thereof, toluene diisocyanate and a diisocyanate corresponding to the formula

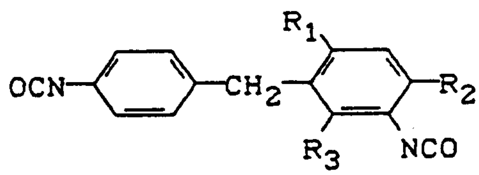

which may be present in admixture with 0 to 40% by weight, based on the total mixture, of diisocyanates corresponding to the formula

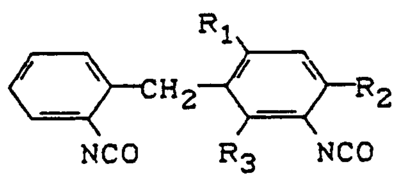

and optionally with 0 to 30% by weight, based on the total mixture, of other diisocyanatodiphenylmethane isomers which may be substituted; wherein two of the radicals $R_1$, $R_2$ and $R_3$ represent hydrogen and one of the radicals $R_1$, $R_2$ and $R_3$ represents a methyl group; with

(ii) a polyamine of the structure:

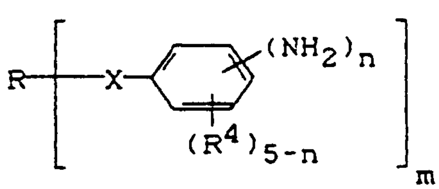

where R represents an m-valent residue obtained by the removal of m functional groups from a compound having m functional groups and having a molecular weight of from 76 to 10,000,

X represents -O-,

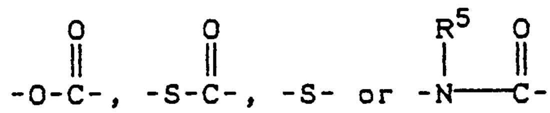

each $R^4$, which can be the same or different, represents hydrogen or an inert substituent,
$R^5$ represents hydrogen, a $C_1$ to $C_6$ alkyl group or a phenyl group,
n is 1 or 2, and
m is an integer of from 2 to 8.

By "inert substituent" is meant any substitutent that does not react with an amine, nitro, hydroxyl or isocyanate group, and includes lower alkyl of from 1 to 8 carbon atoms, such as methyl, ethyl, propyl, butyl and the like; $C_8$ to $C_{12}$ aryl groups; $C_7$ to $C_{10}$ aralkyl groups; $C_4$ to $C_6$ cycloalkyl groups; and $C_1$ to $C_8$ alkoxy groups.

The isocyanates used to prepare the prepolymers of the present invention are selected from the group consisting of methylene bis(phenylisocyanates), polymethylene poly(phenylisocyanates) and mixtures thereof and toluene diisocyanate as well as methyl substituted diisocyanato diphenylmethane. By "methylene bis(phenylisocyanates)" are meant the 2,2'-, the 2,4'- and the 4,4'-isomers and mixtures thereof. It is generally preferred to use the pure 4,4'-isomer. The polymethylenepoly(phenylisocyanates) used herein are known and are typically prepared by the phosgenation of the corresponding methylene bridged poly-(phenylamines), which are conventionally produced by the reaction of formaldehyde and primary aromatic amines. Known processes for the preparation of the amine/formaldehyde condensates as well as the phosgenated products thereof are described in the literature. See, e.g., U.S. Patents 2,683,730, 2,950,263, 3,012,008, 3,344,162, and 3,362,979. Useful mixtures of isocyanates typically contain from 20 to 100% by weight of the diisocyanates with the remainder being polyisocyanates. By "toluene diisocyanate" is meant the 2,4-, 2,3-, 2,6-, and 3,4-isomers and mixtures thereof.

The methyl substituted diisocyanato diphenylmethanes useful to prepare the prepolymers of the present invention are known and are described in U.S. Patent 4,761,498.

The isocyanates are reacted with polyamines of the structure

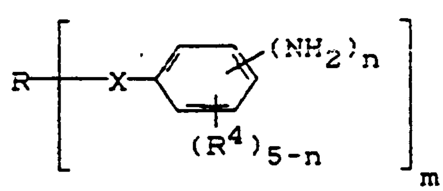

where R, $R^4$, X, m and n are as defined above. The production of such polyamines is generally known and is described in U.S. Patents 3,808,250, 3,817,940, 3,929,863, 3,975,428, 4,016,143, 4,136,091, 4,169,206, 4,260,557, 4,186,257, 4,228,249, 4,504,648, 4,515,981, 4,732,959 and 4,328,322.

Urea group-containing prepolymers are generally prepared by adding the amine, which is at a temperature of from 25 to 60 °C (and preferably at room temperature), to the isocyanate, which is typically at a temperature of from 25 to 60 °C. The mixture is stirred and held at from 40 to 60 °C for a period of from 5 minutes to 1 hour. The product is then cooled to room temperature. Biuret group-containing prepolymers can be prepared by holding the reaction mixtures at temperatures of from 90 to 130 °C for from 15 minutes to two hours, and then quench cooling the product to room temperature. In preparing the biuret prepolymer, it is preferred to heat the mixture to the 90 to 130 °C range as rapidly as possible.
One particularly preferred group of polyamines are those of the structure:

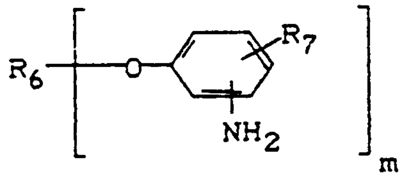

wherein

$R_6$ denotes an m-valent residue obtained by the removal of m-hydroxyl groups from a polyhydroxyl compound having m-hydroxyl groups and having a molecular weight of 76 to 10,000, preferably from 76 to 6,000,

$R_7$ denotes a methyl group or preferably hydrogen and

m denotes an integer with a value of from 2 to 8, preferably from 2 to 4 and most preferably 2 or 3. Such compounds are prepared by first reacting an m-valent polyhydroxyl compound with a nitro halogen benzene to form the corresponding nitrophenoxy adduct, and thereafter hydrogenating the adduct to form the corresponding amino phenoxy product. Further details as to the production of the preferred amines can be found in European Patent Application 0,268,849.

The invention is further illustrated but is not intended to be limited by the following examples in which all parts and percentages are by weight unless otherwise specified.

Examples

In the examples, the following materials were used:

TPG: tripropylene glycol.

POLYOL-A: the reaction product of propylene glycol and propylene oxide having an OH number of about 112.

POLYOL-B: the reaction product of propylene glycol and propylene oxide having an OH number of about 250.

POLYOL-C: the reaction product of propylene glycol and propylene oxide having an OH number of about 364.

POLYOL-D: the reaction product of propylene glycol and propylene oxide having an OH number of about 56.

POLYOL-E: the reaction product of glycerine and propylene oxide having an OH number of about 56.

POLYOL-F: the reaction product of glycerine and propylene oxide having an OH number of about 112.

POLYOL-G: a propylene glycol/propylene oxide adduct having 10% by weight ethylene oxide termination and having an OH number of about 56.

POLYOL-H: a glycerine/propylene oxide adduct having 10% by weight ethylene oxide termination and having an OH number of about 56.

POLYOL-I: a glycerine/propylene oxide adduct having 10% by weight ethylene oxide termination and having an OH number of about 38.

POLYOL-K: a propylene glycol/propylene oxide adduct having 10% by weight ethylene oxide termination and having an OH number of about 38.

POLYOL-L: a propylene glycol/propylene oxide adduct having 10% by weight ethylene oxide termination and having an OH number of about 112.

POLYOL-M: a glycerine/propylene oxide adduct having 10% by weight ethylene oxide termination and having an OH number of about 112.

POLYOL-N: a propylene glycol/propylene oxide adduct having an OH number of about 112.

POLYOL-O: a propylene glycol/propylene oxide adduct having an OH number of about 374.

POLYOL-P: a polytetrahydrofuran ether diol having an OH number of about 56.

POLYAMINE-A: To a stirred solution of 192 grams (1 mole) of TPG, 410 grams (2.6 moles) of ortho-chloronitrobenzene, and 600 ml dimethylsulfoxide, were added 140 grams (3,5 moles) of granular sodium hydroxide over a 2 hour period. The temperature was maintained at between 55 and 60 °C during the addition of the NaOH. After the NaOH addition was complete, the reaction mixture was stirred at 55 °C for an additional 4.5 hours. To the cooled reaction mixture were added 1200 ml distilled water and enough concentrated hydrochloric acid to neutralize any excess NaOH. The layers were separated and the organic layer was again washed with distilled water (4 times with 1000 ml). After the last washing, the residual water

and ortho-chloronitrobenzene were removed by vacuum distillation. The reaction mixture was then filtered to obtain 338 grams of a dark red, clear liquid. 300 grams of the dark red, clear liquid were charged to a one liter, high pressure hydrogenation reactor followed by the addition of 168 grams of methanol and 10.2 grams of Raney nickel. The reaction mixture was stirred under a 70,3 kg/cm$^2$ hydrogen gas pressure while being slowly heated over a 30 minute period to 130 °C. After one hour at 130 °C, hydrogen gas uptake had ceased. The reaction mixture was cooled and the Raney nickel was removed by filtration. The methanol and any low boiling materials present were removed by vacuum distillation. 250 grams of a dark liquid (8960 mPa.s at 25 °C) having an amine number of about 273 (corresponding to a 91% conversion) was obtained.

Using the identical procedure as described for POLYAMINE-A, the following polyamines were prepared:

| POLYAMINE | POLYOL USED | AMINE NO. | % AMINE CONVER. | VISCOSITY AT 25 °C (mPa.S) |
|---|---|---|---|---|
| B | A | 85.7 | 90.4 | 670 |
| C | B | 170 | 95.8 | 1532 |
| D | C | 220 | 96.9 | 2100 |

POLYAMINE-E: To a stirred solution of 150.3 grams (0.05 mole) of POLYOL-E and 35.5 grams of ortho-chloronitrobenzene were added 9.0 (0.23 mole) of granular NaOH. The temperature of the reaction mixture was maintained at 65 °C during the addition of the NaOH. The reaction mixture was then stirred at 65 °C for an additional 8 hours. To the stirred reaction mixture gas added 200 grams of distilled water and enough concentrated hydrochloric acid to make the mixture acidic. The resultant acidic mixture was heated to 120 °C at 133 Pa to remove any excess ortho-chloronitrobenzene and water. The mixture was then filtered to obtain 143 grams of a dark red, clear liquid. The resultant liquid was then reduced using the process described for POLYAMINE-A to yield a dark liquid (1224 mPa.s at 25 °C) having an amine number of about 48 (corresponding to a 92.4% amine conversion).

Using the same process, the following additional polyamines were prepared:

| POLYAMINE | POLYOL USED | AMINE NO. | % AMINE CONVER. | VISCOSITY AT 25 °C (mPa.S) |
|---|---|---|---|---|
| F | D | 47.4 | 92.8 | 812 |
| G | F | 81 | 85.0 | 1148 |

POLYAMINE-H: To a 3-neck flask equipped with a mechanical stirrer, thermometer, condenser and purged with dry nitrogen, were added 250 grams of POLYOL-A, 80 grams of isatoic anhydride and 2.0 grams of KOH. The reaction mixture was heated to 90 °C and held for 20 hours. To the reaction mixture was then added a mixture of 30 grams of distilled water and 1.1 grams of concentrated sulfuric acid. After mixing, 200 ml of toluene was added and then removed by atmosphere distillation. The reaction mixture was then held at 110 °C at 133 Pa pressure to remove the last traces of toluene and water. The product was then filtered to yield 298 grams of a light brown, clear liquid having a viscosity of 1950 mPa.s at 25 °C. The amine number of the product was about 83 which corresponded to a 91% conversion of the polyol to the amine.

POLYAMINE-J: Using the procedure described for POLYAMINE-H, POLYOL-B was converted to an amine having a viscosity of 11,060 mPa.s at 25 °C and an amine number of 146, which corresponded to an 86% conversion.

POLYAMINE-K: To a stirred 3-neck flask was added 200 grams of an aminated, difunctional 2000 molecular weight polyoxypropylene diol (Jeffamine D-2000, available from Texaco), 32.6 grams of isatoic anhydride was then added. The stirred reaction mixture was heated to 80 °C and held for 3 hours. The reaction mixture was then cooled to 25 °C to yield a dark clear liquid having a viscosity of 5790 mPa.s at 25 °C.

POLYAMINE-L: To a stirred 3-neck flask were added 44.4 grams of an aminated difunctional 888 molecular weight polyoxypropylene diol (Jeffamine DU-700, available from Texaco) and 100 grams of Jeffamine D-2000. To this was then added 32.6 grams of isatoic anhydride. The stirred reaction mixture was heated slowly over a 2 hour period to 80 °C and then held at 80 °C for 1.5 hours. The reaction mixture was then cooled to 25 °C to yield a dark clear liquid having a viscosity of 23,600 mPa.s at 25 °C.

POLYAMINE-M: To a stirred solution of 764 grams (0.75 moles) of POLYOL-A, 313 grams (2.0 moles) of parachloronitrobenzene and 1000 ml of dimethyl-sulfoxide, were added 107 grams (2.7 moles) of granular NaOH over a 3 hour period. The temperature was maintained at between 60 and 65 °C during the addition of the NaOH. After the NaOH addition was complete, the reaction mixture was stirred at 65 °C for an additional 12 hours. The mixture was then worked up as described for POLYAMINE-A to yield a dark red, clear liquid. The liquid was reduced using the process described for POLYAMINE-A to yield a dark liquid having a viscosity of 640 mPa.s at 25 °C and an amine number of about 95, which corresponded to a 100% conversion.

POLYAMINE-N: To a stirred solution of 4429 grams (1.0 mole) of POLYOL-I and 709 grams (4.5 moles) of ortho-chloronitrobenzene were added 180 grams (4.5 moles) of granular sodium hydroxide. The temperature of the reaction mixture was maintained at 65 °C during the addition of the sodium hydroxide (which took about 30 minutes). The reaction mixture was then stirred at 65 °C for an additional 40 hours. To the stirred reaction mixture was then added 300 grams of distilled water and enough concentrated hydrochloric acid to make the mixture acidic. The resultant acidic mixture was heated to 120 °C at 133 Pa pressure to remove excess ortho-chloronitrobenzene and water. The product was then filtered to afford a dark red, clear liquid. 932 grams of the filtered product were charged to a one gallon, high pressure hydrogenation reactor, followed by the addition of 930 ml of methanol and 30 grams of Raney nickel. The reaction mixture was stirred under a 70,3 $kg/cm^2$ hydrogen gas pressure while being heated over a 30 minute period to 130 °C. After one hour at 130 °C, hydrogen gas uptake had become very slow. After an additional 4 hours at 130 °C, the reaction mixture was cooled and the Raney nickel was removed by filtration. The methanol and any low boiling materials present were removed by vacuum distillation. The resultant dark liquid had a viscosity at 25 °C of 1530 mPa.s and an amine number of about 36, which corresponded to 100% conversion to the triamine.

POLYAMINE-O: To a stirred solution of 2953 grams (1.0 mole) of POLYOL-K and 473 grams (3.0 moles) of ortho-chloronitrobenzene were added 120 grams (3.0 moles) of granular sodium hydroxide. The temperature of the reaction mixture was maintained at 65 °C during the addition of the sodium hydroxide (which required about 30 minutes. The reaction mixture was then stirred for an additional 32 hours and worked-up as described for POLYAMINE-N. Reduction of the material as described for POLYAMINE-N produced a dark liquid having a viscosity of 1040 mPa.s at 25 °C and an amine number of about 33, which corresponded to 92% conversion to the diamine.

POLYAMINE-P: To a stirred solution of 3000 grams (1.0 mole) of POLYOL-H and 591 grams (3.75 moles) of ortho-chloronitrobenzene were added 180 grams (4.5 moles) of granular sodium hydroxide. The temperature of the reaction mixture was maintained at 65 °C during the addition of the sodium hydroxide (which required about 30 minutes). The reaction mixture was then stirred for an additional 16 hours and worked-up as described for POLYAMINE-N. Reduction of the material as described for POLYAMINE-N produced a dark liquid having a viscosity of 1190 mPa.s at 25 °C and an amine number of about 50, which corresponded to 98% conversion to the triamine.

POLYAMINE-Q: To a stirred solution of 2000 grams (1.0 mole) of POLYOL-G and 394 grams (2.4 moles) of ortho-chloronitrobenzene were added 120 grams (3.0 moles) of granular sodium hydroxide. The temperature of the reaction mixture was maintained at 65 °C during the addition of the sodium hydroxide (which required about 30 minutes). The reaction mixture was then stirred for an additional 16 hours and worked-up as described for POLYAMINE-N. Reduction of the material as described for POLYAMINE-N produced a dark liquid having a viscosity of 780 mPa.s at 25 °C and an amine number of about 50, which corresponded to 98% conversion to the diamine.

POLYAMINE-R: To a stirred solution of 1000 grams (1.0 mole) of POLYOL-L and 347 grams (2.2 moles) of ortho-chloronitrobenzene were added 100 grams (2.5 moles) of granular sodium hydroxide. The temperature of the reaction mixture was maintained at 65 °C during the addition of the sodium hydroxide (which required about 120 minutes). The reaction mixture was then stirred for an additional 12 hours and worked-up as described for POLYAMINE-N. Reduction of the material as described for POLYAMINE-N produced a dark liquid having a viscosity of 580 mPa.s and an amine number of about 84, which corresponded to 88% conversion to the diamine.

POLYAMINE-S: To a stirred solution of 1500 grams (1.0 mole) of POLYOL-M and 520 grams (3.3 moles) of ortho-chloronitrobenzene were added 150 grams (3.75 moles) of granular sodium hydroxide. The temperature of the reaction mixture was maintained at 65 °C during the addition of the sodium hydroxide (which required about 120 minutes). The reaction mixture was then stirred for an additional 16 hours and worked-up as described for POLYAMINE-N. Reduction of the material as described for POLYAMINE-N produced a dark liquid having a viscosity of 1360 mPa.s at 25 °C and an amine number of about 88, which corresponded to 92% conversion to the triamine.

POLYAMINE-T: To a stirred solution of 482 grams (1.6 moles) of POLYOL-O, 660 grams (4.2 moles) of ortho-chloronitrobenzene and 1000 ml of dimethylsulfoxide were added 225 grams (5,6 moles) of granular sodium hydroxide. The temperature of the reaction mixture was maintained at 60 to 65 °C during the addition of the sodium hydroxide (which required about 120 minutes). The reaction mixture was then stirred for an additional 5 hours at 65 °C. To the reaction mixture were added 1500 ml distilled water and enough concentrated hydrochloric acid to make the mixture acidic. The layers were separated and the organic layer was again washed with distilled water (4 times with 1200 ml). After the last washing, the residual water and ortho-chloronitrobenzene were removed by vacuum distillation at 120 °C and 133 Pa pressure. The reaction mixture was then filtered to afford a dark, clear liquid having a viscosity at 25 °C of 2520 mPa.s. Reduction of the material as described for POLYAMINE-N produced a dark liquid having a viscosity of 2150 mPa.s at 25 °C and an amine number of about 222, which corresponded to 96% conversion to the diamine.

POLYAMINE-U: To a 3-neck flask equipped with a mechanical stirrer, thermometer, condenser and purged with dry nitrogen, were added 250 grams of POLYOL-N, 80 grams of isatoic anhydride and 2.0 grams of potassium hydroxide. The reaction mixture was heated to 90 °C and held for 20 hours at that temperature. To the reaction mixture was then added a mixture of 30 grams of distilled water and 3.6 grams of concentrated hydrochloric acid. After mixing, 200 ml of toluene were added and then a water/toluene azeotrope is removed by atmospheric distillation. The reaction mixture was then held at 110 °C and 133 Pa pressure to remove the last traces of toluene and water. The product was then filtered to afford 298 grams of a light brown, clear liquid having a viscosity of 1950 mPa.s at 25 °C. The amine number of the product was 83 which corresponded to a 91% conversion to the diamine.

POLYAMINE-V: To a stirred solution of 1500 grams (0.75 mole) of POLYOL-P and 246 grams (1.5 moles) of isatoic anhydride were added 4 grams (0.1 mole) of sodium hydroxide. The reaction mixture was heated to 90 °C and held at that temperature for 72 hours. The reaction mixture was then worked-up as described for POLYAMINE-U to yield a dark clear liquid having a viscosity at 25 °C of 5350 mPa.s and an amine number of about 43 which corresponded to a 86% conversion to the diamine.

MDI x/y: x represents the total amount of diisocyanate in the isocyanate and y represents the total amount of the 2,2' and 2,4'-isomers of methylene bis(phenylisocyanate) in the isocyanate. When x is less than 100, the difference is made up of the higher homologs of methylene bis(phenylisocyanate). When x is less than 100, the isocyanate group content, in each instance, is about 33% by weight.

METHYL-MDI: A mixture of isomers containing about 60% by weight 3,4'-diisocyanato-2-,-4-, or -6-methyldiphenylmethane, about 30% by weight 3,2'-diisocyanato-2-,-4-, or -6-methyldiphenylmethane, and 10% by weight of analytically unidentified methyl substituted diisocyanato diphenylmethane isomers. The NCO content is about 32% by weight.

## EXAMPLE 1

15.0 grams of POLYAMINE-A were added with stirring over a 5 minute period to 104.6 grams of MDI 100/2 while holding the temperature at 50 °C. The temperature was then raised over a 12 minute period to 120 °C and then held at that temperature for 40 minutes. The mixture was then quench-cooled to 25 °C. The resultant clear, biuret group-containing prepolymer had an NCO content of 23.6% and a viscosity at 25 °C of 1230 mPa.s.

## EXAMPLE 2

27.0 grams of POLYAMINE-A were added with stirring over a 5 minute period to 223 of MDI 81/33 while holding the temperature at 50 °C. A 50 gram sample of the urea prepolymer was removed from the reaction mixture and was cooled to 25 °C. The product was a stable dark clear liquid having an NCO content of 25.8%.

The remaining reaction mixture was heated to 120 °C over a 5 minute period and then held for 40 minutes, followed by quench cooling to 25 °C. The resultant clear biuret prepolymer had an NCO content of about 24% and a viscosity at 25 °C of 4670 mPa.s.

## EXAMPLE 3

443 grams of POLYAMINE-C were added with stirring over a 22 minute period to 1807 grams of MDI 100/2 while holding the temperature at 50 °C. The temperature was then raised over a 30 minute period to 120 °C and held at that temperature for 40 minutes, followed by quench cooling to 25 °C. The clear biuret prepolymer had an NCO content of 21.3% and a viscosity at 25 °C of 2960 mPa.s.

EXAMPLE 4

500 grams of POLYAMINE-C were added with stirring over a 30 minute period to 1498 grams of MDI 100/2 while holding the temperature at 50 ° C. The temperature was held at 50 ° C for 10 minutes and then quench cooled to 25 ° C. The clear urea prepolymer had an NCO content of 20.9% and a viscosity at 25 ° C of 1264 mPa.s.

EXAMPLES 5 THROUGH 36

Examples 5 through 21 used the process of Example 3, while Examples 22 through 36 used the process of Example 4. The materials used and the results obtained were as set forth in the following table.

EXAMPLE 37

19 grams of POLYAMINE-Q were added with stirring over a 10 minute period to 81 grams of toluene diisocyanate (80% 2,4 and 20% 2,6) while holding the temperature at 50 ° C. The temperature was held at 50 ° C for additional 10 minutes and then cooled over a five minute period to 25 ° C. The clear urea prepolymer had an NCO content of about 38% by weight and a viscosity at 25 ° C of 21 mPa.s.

EXAMPLE 38

19 grams of POLYAMINE-Q were added with stirring over a 10 minute period to 81 grams of toluene diisocyanate (80% 2,4 and 20% 2,6) while holding the temperature at 50 ° C. The temperature was then raised over a 20 minute period to 120 ° C and held at that temperature for 40 minutes, followed by quench cooling to 25 ° C. The clear biuret prepolymer had an NCO content of 37% by weight and a viscosity at 25 ° C of 27 mPa.s.

EXAMPLES 39 THROUGH 55

Examples 39 through 47 used the process of Example 37, while Examples 48 through 55 used the process of Example 38. The materials used and the results obtained were as set forth in the following table.

EXAMPLE 56

22.5 grams of POLYAMINE-Q were added with stirring over a 10 minute period to 77.5 grams of METHYL-MDI while holding the temperature at 50 ° C. The temperature was held at 50 ° C for an additional 10 minutes and then cooled over a five minute period to 25 ° C. The clear urea prepolymer had an NCO content of about 24% and a viscosity at 25 ° C of 196 mPa.s.

EXAMPLE 57

22.5 grams of POLYAMINE-Q were added with stirring over a 10 minute period to 77.5 grams of METHYL-MDI while holding the temperature at 50 ° C. The temperature was then raised over a 20 minute period to 120 ° C and held at that temperature for 40 minutes, followed by quench cooling to 25 ° C. The clear biuret prepolymer had an NCO content of about 23% by weight and a viscosity at 25 ° C of 304 mPa.s.

EXAMPLES 58 THROUGH 73

Examples 58 through 65 used the process of Example 56, while Examples 66 through 73 used the process of Example 57. The materials used and the results obtained were as set forth in the following table.

TABLE

| EXAMPLES | POLYAMINE USED | PBW, POLYAMINE | MDI ISO-CYANATE USED | PBW ISOCYANATE | % BY WEIGHT, NCO CONTENT | VISCOSITY $25^0$ C mPa.s |
|---|---|---|---|---|---|---|
| 5 | J | 52 | 86/37 | 154 | 20.4 | 7420 |
| 6 | G | 45 | 100/2 | 100 | 18.1 | 7620 |
| 7 | B | 68 | 100/2 | 155 | 18.4 | 1708 |
| 8 | F | 65 | 100/2 | 100 | 16.8 | 1600 |
| 9 | D | 45 | 100/2 | 255 | 23.2 | 1420 |
| 10 | F | 28 | 78/25 | 100 | 23.2 | 436 |
| 11 | M | 65 | 100/2 | 152 | 19.0 | 4300 |
| 12 | F | 32 | 79/7 | 100 | 22.6 | 432 |
| 13 | H | 45 | 100/2 | 100 | 19.0 | 2040 |
| 14 | E | 54 | 100/2 | 100 | 18.8 | 1248 |
| 15 | J | 25 | 100/2 | 100 | 22.1 | 1860 |
| 16 | E | 32 | 79/7 | 100 | 22.5 | 568 |
| 17 | K | 64 | 100/2 | 125 | 18.3 | 1800 |
| 18 | L | 38 | 100/2 | 100 | 19.5 | 2650 |
| 19 | H | 51 | 86/37 | 149 | 21.1 | 1150 |
| 20 | K | 56 | 86/37 | 144 | 20.8 | 920 |
| 21 | L | 52 | 86/37 | 148 | 20.5 | 1970 |

TABLE - Continued

| EXAMPLES | POLYAMINE USED | PBW, POLYAMINE | MDI ISO-CYANATE USED | PBW ISOCYANATE | % BY WEIGHT, NCO CONTENT | VISCOSITY 25° C mPa.s |
|---|---|---|---|---|---|---|
| 22 | B | 65 | 100/2 | 135 | 19.9 | 492 |
| 23 | F | 55 | 100/2 | 55 | 14.4 | 1496 |
| 24 | D | 74 | 100/2 | 264 | 21.7 | 2135 |
| 25 | F | 35 | 78/25 | 100 | 22.5 | 340 |
| 26 | H | 55 | 100/2 | 100 | 19.2 | 984 |
| 27 | F | 37 | 79/7 | 100 | 22.6 | 328 |
| 28 | J | 35 | 100/2 | 100 | 21.2 | 1320 |
| 29 | E | 37 | 79/7 | 100 | 22.4 | 344 |
| 30 | C | 40 | 81/33 | 160 | 22.1 | 1760 |
| 31 | J | 52 | 86/37 | 154 | 21.8 | 1980 |
| 32 | H | 51 | 86/37 | 149 | 22.1 | 640 |
| 33 | K | 56 | 86/37 | 144 | 21.7 | 620 |
| 34 | L | 52 | 86/37 | 148 | 21.9 | 890 |
| 35 | G | 60 | 100/2 | 100 | 17.6 | 2168 |
| 36 | E | 35 | 78/25 | 100 | 22.6 | 358 |

TABLE - Continued

| EXAMPLES | POLYAMINE USED | PBW, POLYAMINE | PBW ISOCYANATE | % BY WEIGHT, NCO CONTENT | VISCOSITY 25° C mPa.s |
|---|---|---|---|---|---|
| 39 | P | 28.2 | 71.8 | 33.2 | 48 |
| 40 | N | 46.2 | 53.8 | 24.0 | 320 |
| 41 | O | 46.2 | 53.8 | 24.5 | 165 |
| 42 | S | 23.0 | 77.0 | 35.2 | 35 |
| 43 | R | 23.0 | 77.0 | 35.2 | 33 |
| 44 | T | 23.0 | 77.0 | 31.9 | 90 |
| 45 | U | 23.1 | 76.9 | 35.3 | 31 |
| 46 | V | 23.1 | 76.9 | 36.0 | 150 |
| 47 | T | 26.5 | 73.5 | 30.2 | 370 |
| 48 | P | 28.2 | 71.8 | 32.1 | 66 |
| 49 | N | 46.2 | 53.8 | 22.8 | 460 |
| 50 | O | 46.2 | 53.8 | 23.5 | 250 |
| 51 | S | 23.0 | 77.0 | 34.0 | 58 |
| 52 | R | 23.0 | 77.0 | 33.8 | 42 |
| 53 | T | 23.0 | 77.0 | 28.6 | 908 |
| 54 | U | 23.1 | 76.9 | 33.9 | 43 |
| 55 | V | 23.1 | 76.9 | 35.2 | 220 |

TABLE - Continued

| EXAMPLE | AMINE USED | AMINE PBW | ISO PBW | NCO CONTENT % BY WT. | VISCOSITY AT 25° C mPa.s |
|---|---|---|---|---|---|
| 58 | N | 43.1 | 56.9 | 16.2 | 2060 |
| 59 | O | 43.1 | 56.9 | 16.5 | 1100 |
| 60 | S | 23.1 | 76.9 | 22.2 | 580 |
| 61 | R | 23.1 | 76.9 | 22.3 | 350 |
| 62 | P | 26.3 | 73.7 | 21.8 | 440 |
| 63 | U | 21.9 | 78.1 | 22.9 | 380 |
| 64 | V | 23.1 | 76.9 | 23.2 | 600 |
| 65 | T | 15.0 | 85.0 | 23.4 | 748 |
| 66 | N | 43.1 | 56.9 | 14.9 | 5200 |
| 67 | O | 43.1 | 56.9 | 15.7 | 1900 |
| 68 | S | 23.1 | 76.9 | 20.7 | 2010 |
| 69 | R | 23.1 | 76.9 | 21.0 | 970 |
| 70 | P | 26.3 | 73.7 | 21.1 | 775 |
| 71 | U | 21.9 | 78.1 | 22.0 | 740 |
| 72 | V | 23.1 | 76.9 | 22.3 | 900 |
| 73 | T | 15.0 | 85.0 | 21.3 | 7860 |

## Claims

**1.** A liquid isocyanate prepolymer having an isocyanate group content of from 14.4 to 38% by weight and viscosities at 25° C of from 21 to 7860 mPas, prepared by reacting

i) an isacyanate selected from methylene bis(phenylisocyanates), polymethylene poly-(phenylisocyanates), mixtures thereof, toluene diisocyanate and a diisocyanate corresponding to the formula

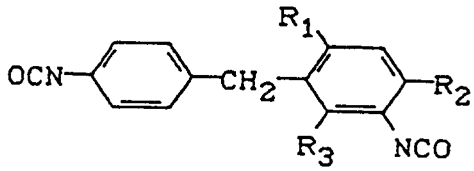

which may be present in admixture with 0 to 40% by weight, based on the total mixture, of diisocyanates corresponding to the formula

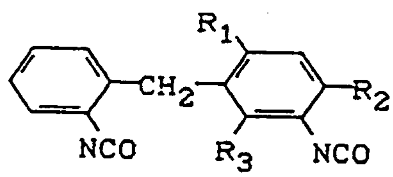

and optionally with 0 to 30% by weight, based on the total mixture, of other diisocyanatodiphenylmethane isomers which may be substituted; wherein two of the radicals $R_1$, $R_2$ and $R_3$ represent hydrogen and one of the radicals $R_1$, $R_2$ and $R_3$ represents a methyl group; with
(ii) a polyamine of the structure:

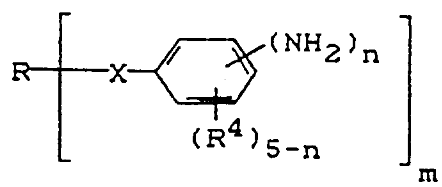

where R represents an m-valent residue obtained by the removal of m functional groups from a compound having m functional groups and having a molecular weight of from 76 to 10,000,
X represents -O-,

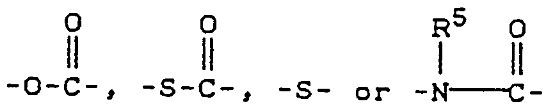
, , -S- or

$R^4$ represents hydrogen or an inert substituent (being any substituent which does not react with an amine, nitro, hydroxyl or isocyanate group),
$R^5$ represents hydrogen, a $C_1$ to $C_6$ alkyl group or a phenyl group,
n is 1 or 2, and
m is an integer of from 2 to 8.

2. The prepolymer of Claim 1 having an isocyanate group content of from 14 to 35% by weight.

3. The prepolymer of Claim 1 wherein $R^4$ represents hydrogen, m is 2 and X is -O-.

**Patentansprüche**

1. Flüssiges Isocyanat-Prepolymer mit einem Gehalt an Isocyanat-Gruppen von 14,4 bis 38 Gew.-% und einer Viskosität bei 25 °C von 21 bis 7 860 mPa•s, hergestellt durch Umsetzung

(i) eines Isocyanats, das ausgewählt ist aus Methylenbis(phenylisocyanaten), Polymethylenpoly-(phenylisocyanaten), deren Mischungen, Toluoldiisocyanat und einem Diisocyanat entsprechend der Formel

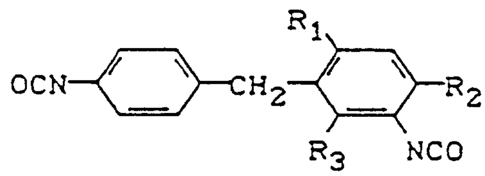

,

das im Gemisch mit 0 bis 40 Gew.-%, bezogen auf die gesamte Mischung, Diisocyanaten entsprechend der Formel

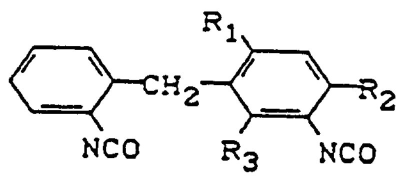

und gegebenenfalls mit 0 bis 30 Gew.-%, bezogen auf die gesamte Mischung, anderer Diisocyanatodiphenylmethan-Isomeren, die substituiert sein können, vorliegen kann; worin zwei der Reste $R_1$, $R_2$ und $R_3$ Wasserstoff darstellen und einer der Reste $R_1$, $R_2$ und $R_3$ eine Methyl-Gruppe darstellt; mit

(ii) einem Polyamin der Struktur

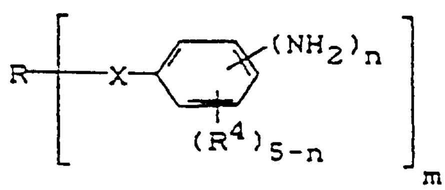

worin

- R einen m-wertigen Rest darstellt, der durch Entfernen von m funktionellen Gruppen aus einer Verbindung mit m funktionellen Gruppen und einem Molekulargewicht von 76 bis 10 000 erhalten worden ist,
- X -O-,

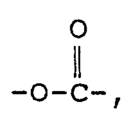, 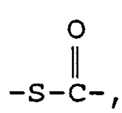, -S- oder 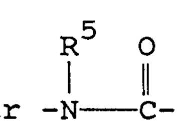

darstellt,
- $R^4$ Wasserstoff oder einen inerten Substituenten darstellt (der ein Substituent ist, der nicht mit einer Amin-, Nitro-, Hydroxyl- oder Isocyanat-Gruppe reagiert),
- $R^5$ Wasserstoff, eine $C_1$- bis $C_6$-Alkyl-Gruppe oder eine Phenyl-Gruppe darstellt,
- n 1 oder 2 ist und
- m eine ganze Zahl von 2 bis 8 ist.

**2.** Prepolymer nach Anspruch 1 mit einem Gehalt an Isocyanat-Gruppen von 14,4 bis 35 Gew.-%.

**3.** Prepolymer nach Anspruch 1, worin $R^4$ Wasserstoff darstellt, m 2 ist und X -O- ist.

## Revendications

**1.** Prépolymère d'isocyanate liquide ayant une teneur en groupes isocyanate de 14,4 à 38 % en poids et une viscosité à 25 °C de 21 à 7860 mPa.s, préparé par réaction de :

(i) un isocyanate choisi parmi les suivants :

méthylène bis(phénylisocyanate), polyméthylènepoly(phénylisocyanate), des mélanges de ceux-ci, diisocyanatotoluène et un diisocyanate correspondant à la formule

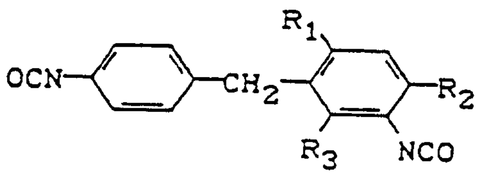

qui peut être présent en mélange avec de 0 à 40 % en poids, par rapport au mélange total, de diisocyanates correspondant à la formule

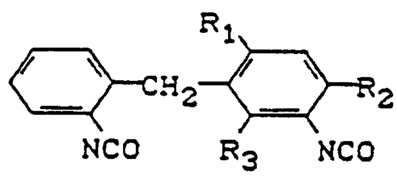

et éventuellement avec de 0 à 30 % en poids, par rapport au mélange total, d'autres isomères de diisocyanatodiphénylméthane qui peuvent être substitués ; dans laquelle deux des radicaux $R_1$, $R_2$ et $R_3$ représentent un atome d'hydrogène et l'un radicaux $R_1$, $R_2$ et $R_3$ représente un groupe méthyle ; avec

(ii) une polyamine de structure :

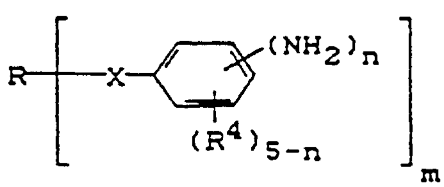

dans laquelle R représente un résidu de valence m obtenu par élimination de m groupes fonctionnels d'un composé ayant m groupes fonctionnels et ayant un poids moléculaire de 76 à 10000, X représente -O-,

$$-O-\overset{O}{\overset{\|}{C}},\ -S-\overset{O}{\overset{\|}{C}}-,\ -S-\ \text{ou}\ -\overset{R^5}{\overset{|}{N}}-\overset{O}{\overset{\|}{C}}-$$

$R^4$ représente un atome d'hydrogène ou un substituant inerte (c'est-à-dire tout substituant ne réagissant pas avec un groupe amine, nitro, hydroxyle ou isocyanate),

$R^5$ représente un atome d'hydrogène, un groupe alkyle en $C_1$-$C_6$ ou un groupe phényle,

n vaut 1 ou 2 et

m est un entier de 2 à 8.

2. Prépolymère selon la revendication 1 ayant une teneur en groupes isocyanate de 14 à 35 % en poids.

3. Prépolymère selon la revendication 1, dans laquelle $R^4$ représente un atome d'hydrogène, m vaut 2 et X représente -O-.